# EUROPEAN PATENT SPECIFICATION

(11) **EP 1 639 282 B1**
(45) Date of publication and mention of the grant of the patent: **23.07.2008**
(21) Application number: 03817685.5
(22) Date of filing: 26.06.2003
(51) Int. Cl.: F16K 31/365

(54) **SENSITIVE FLUID BALANCING RELIEF VALVE**
EMPFINDLICHES FLUIDAUSGLEICHSENTLASTUNGSVENTIL
SOUPAPE D'EQUILIBRAGE DE PRESSION REAGISSANT AU FLUIDE

(43) Date of publication of application: 29.03.2006
(73) Proprietor: Jennings, Jeffrey, Hendersonville, NC 28791 (US)
(72) Inventor: Jennings, Jeffrey, Hendersonville, NC 28791 (US)
(74) Representative: Sherrard-Smith, Hugh
(86) International application number: PCT/US2003/020331
(87) International publication number: WO 2005/010418

(56) References cited:
- US-A- 4 679 421
- US-A- 4 846 215

## Description

### Field of the Invention

The present invention relates to a new and improved modulated pressure relief valve which balances vessel or line pressure against a reference pressure signal.

### Background

There has been a long felt desire for a modulated pressure relief valve on a vessel for venting fluid when the pressure exceeds a desired dynamic set point or threshold. A particular desire is for a modulated pressure relief valve with a threshold that could vary according to process requirements having an upper limit that could serve to avoid blowing a safety relief device such as an expendable rupture disc or pop-off safety relief valve, both of which are typically designed for infrequent use. It is preferred to communicate the desired pressure set point to the relief valve via a reference pressure signal (typically air) that is equal to the desired vessel pressure.

Furthermore, it is desirable to have a modulating pressure relief valve that is very simple, with cleanable parts and with no narrow passageways that can become plugged with debris or frozen product. Such a device would be useful in many applications, including the food, beverage, gelatin, and polymer industries where the product can become frozen in critical passages, and where all crevices must be exposed to the rinsing and cleaning processes.

Typical safety relief valves, such as those exemplified in U.S. Pat. No. 6,095,183, show a valve member biased by a spring into engagement with a seat. If product pressure exceeds a predetermined level, the force against the valve exceeds the biasing force of the spring, causing the valve to lift from the seat to vent product pressure.

Typical diaphragm relief valves, such as those exemplified in U.S. Pat. No. 5,944,050, do present simple, cleanable surfaces, yet they clearly do not meet the dynamic set-point requirement desired in the art. Furthermore, the inaccuracies of the spring compression typically result in wide variations in relieving pressures, often greater than 10%, and the variations change over time.

Dynamically modulated relief valves are provided that use a reference or pilot signal as exemplified in US. Pat No. 6, 318,406. These typically involve complex spring and seal mechanisms. Besides the inherent robustness issues with the complex mechanisms, they are clearly not acceptable for use is processes with debris, freezeable product, or requiring cleanability.

Typical relief valves are quite insensitive to slight differences in pressure, and typically have large cracking pressure biases. A highly sensitive relief valve would help maintain a constant vessel pressure during changes in the upstream process environment which is a feature that is very useful in many industrial steady-state applications, including constant-flow applications.

Further, there has been a long felt desire for a relief valve that could balance vessel pressure exactly to a reference, or pilot, pressure. This would facilitate a complete vessel pressure control system when used in conjunction with a simple instrument pressure sender and a, preferably, non-loss check valve.

Typically available pilot actuated relief valves cannot control vessel pressure to the exact pressure of the reference signal.

There has also been a long felt desire to control the pressure of a pumping system by means of a re-circulating loop comprising a relief valve with dynamic set-point capability, and with the other advantages of sensitivity, accuracy and cleanability described above. Relief valves deployed in such re-circulating loops are typically referred to as "backpressure regulators".

Further, there has been a long felt desire for a relief valve (or backpressure regulator) to be suitable for use with hear sensitive fluids. Such fluids can be damaged or form agglomerates when subjected to the high shear gradients found in typical relief valve seats.

US 4846215 disclose a backpressure regulator comprising a diaphragm held within a cavity formed by opposed faces of top and bottom parts. The opposed faces are tapered so that the depth of the cavity is greatest at the middle. The top part has an inlet for a fluid at a reference pressure. The bottom part has a single inlet for a process fluid. Channels are provided to disperse the process fluid evenly under the diaphragm. A single fluid outlet in the centre of the bottom part is sealed by the diaphragm when the reference pressure exceeds the process pressure. When the reference pressure is less than the process pressure, the diaphragm is forced upwards to allow the process fluid to vent from the single outlet.

### Summary of the Invention

It is an object of the invention to provide a pressure relief device which is simple and cleanable, making it useful in a variety of process applications where debris, freezeable product, or sanitary requirements prohibit recesses or crevices.

A further objective of the invention is the ability to control vessel pressure via a remote pressure reference signal, such as commonly used in industrial control systems.

Particular features of the relief device include simplicity and cleanability, suitability with shear sensitive fluids, response to remote reference signal, and high sensitivity to slight differences between the reference pressure and process pressure to achieve complete balance between vessel and reference pressure.

A further objective of the invention is to perfectly balance vessel pressure with the reference pressure so as to facilitate a completely automated vessel pressure control system, both filling and relieving, by adding only a pressure sending device isolated from the process by a check valve.

In a preferred embodiment, vessel pressure is generated in a forward direction by a pressure sender through a check valve, while all reductions in vessel pressure are conducted by a modulating pressure relief valve with reference pressure communicated directly from a pressure sender.

Yet another objective of the invention is to provide a device with highpressure sensitivity while preventing the unnecessary venting of process fluids. This invention is imminently suitable for protecting sensitive instrumentation from moisture, foam or debris from the vessel venting process.

Yet another objective of this invention is to provide a back-pressure regulator for use in modulating pump system pressure that utilizes a dynamic set-point and is quite suitable for process requiring a simple design, cleanability, and low-shear design.

The present invention is a floating diaphragm relief device that balances vessel, or line, pressure against a reference pressure signal. A simple flexible diaphragm constrained on its periphery separates the reference fluid chamber on one side from a specific seating surface on the other side. This seating surface contains a connection to both the vessel, line or upstream process and vent or downstream environment. The seating surface contains a plurality of vent holes of varying, but defined, sizes, which, when the diaphragm is not fully seated against them, can communicate from the vessel or line to the vent or lower pressure environment. The total process void cross-sectional area is larger than the sum total cross-sectional area of the vent voids.

A particularly preferred embodiment is provided in a relief valve comprising a diaphragm. The diaphragm has a fluid pressure on a first side and a process pressure on a second side. The second side is engagable with a process void and a plurality of vent voids such that when the process pressure is at or below the fluid pressure, the diaphragm is engaged with the vent voids. When the process pressure is above the fluid pressure, the diaphragm is not engaged with at least one of the vent voids. The total process void cross-sectional area is larger than the sum total cross-sectional area of the vent voids.

Another preferred embodiment is provided in a relief valve. The relief valve comprises a process housing which comprises a process void and a plurality of vent voids. The process void is in pressure communication with a process system, with a process pressure. The vent voids selectively allows material to flow from the process system through the vent voids. A reference housing is provided wherein the reference housing contains a fluid at a predetermined pressure. A diaphragm is between the process housing and the reference housing and capable of engaging with the vent voids and the process void. When the reference pressure is equal or higher than the process pressure, the diaphragm is engaged with the vent voids. When the process pressure is higher than the reference pressure, the diaphragm is not engaged with at least one of the vent voids, and the process pressure can decrease through the vent void. The total process void cross-sectional area is larger than the sum total cross-sectional area of the vent voids.

Another particularly preferred embodiment is provided in a relief valve. The relief valve comprises a diaphragm between a reference housing and a process housing. The process housing comprises a reference void in pressure communication with a process vessel at a process pressure, and a plurality of vent voids. The reference housing comprises a fluid at a reference pressure. When the reference pressure equals or exceeds the process pressure, the diaphragm is engaged with the vent voids and when the process pressure exceeds the reference pressure, the diaphragm is not engaged with the vent voids and the process pressure decreases by venting through the vent voids. The total process void cross-sectional area is larger than the sum total cross-sectional area of the vent voids.

### Brief Description of Drawings

Figure 1 is an exploded perspective view of an embodiment of the present invention.
Figure 2 is a cross-sectional view of an embodiment of the present invention.
Figure 3 is a schematic representation of a system incorporating the present invention.
Figure 4 is a schematic representation of an embodiment of the present invention.
Figure 5 is a schematic representation of an embodiment of the present invention.

### Detailed Description

The invention is described with reference to the drawings. The drawings are provided to facilitate discussion of the invention and are not intended to limit the invention in any way. In the drawings, all similar elements are numbered accordingly.

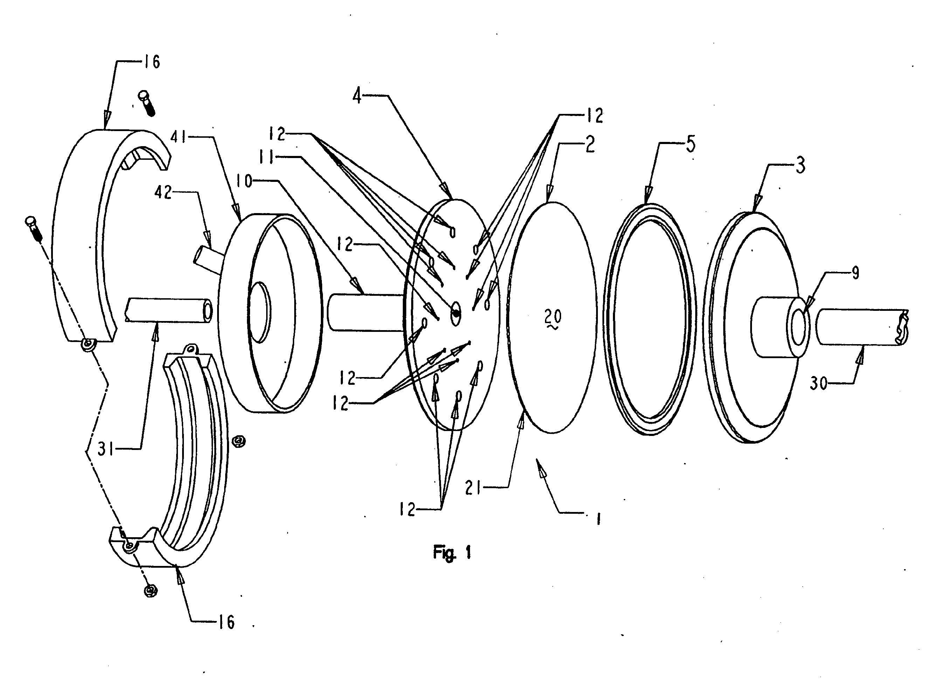

An embodiment of the present invention is provided in Figure 1. In Figure 1, the modulated pressure relief valve, generally represented at 1, is shown in exploded perspective view. The modulated pressure relief valve 1 comprises a diaphragm 2 which is enclosed between a reference housing 3 and a process housing 4. The diaphragm 2 comprises a reference surface 20 and a process surface 21, which is opposite the reference surface. For the purposes of the present application, the volume between the reference surface of the diaphragm and reference housing is referred to as the reference volume, and the area between the process surface of the diaphragm and the process housing is referred to as the process volume. An optional seal 5 can be employed between the diaphragm and reference housing, between the diaphragm and process housing, or both, to ensure that the entire assembly is sealed relative to operating pressure ranges that are anticipated.

The reference housing 3 comprises a reference coupling 9 which engages with a reference pressure source 30. The reference coupling 9 can be any coupling typically employed for connecting a fluid source to a device. Threaded couplings, compression couplings, ferreled couplings, soldered couplings, welded couplings, barbed couplings attached to flexible tubing and the like are imminently suitable for the demonstration of the invention.

The process housing 4 comprises a process coupling 10 which attaches to a process system 31, within which the pressure is to be maintained. The process coupling 10 can be any coupling typically employed for connecting a pressure regulator, or pressure release to a process vessel or line. Threaded couplings, compression couplings, ferreled couplings, soldered couplings, welded couplings, barbed couplings attached to flexible tubing and the like are imminently suitable for the demonstration of the invention. It would be well within the ability of one skilled in the art to attach a process system to a coupling and further description herein is not warranted.

The process housing 4 comprises a process void 11 which is in pressure communication with the process vessel such that the pressure at the process void is proportional to the pressure in the process vessel. In a particularly preferred embodiment, the pressure at the process void is approximately equal to the pressure in the process vessel. At least one vent void 12 is provided in the process housing 4. The vent void 12 is in flow communication with the environment exterior to the process vessel. As will be more fully understood from further descriptions, when the pressure exerted on the reference surface of the diaphragm exceeds the pressure on the process surface of the diaphragm at the vent process vent 11, the process void and vent voids are engaged by the diaphragm, thereby sealing the vent void and prohibiting material, or the pressure created by material, from passing through the vent void. When the pressure in the process void 11 is sufficient to dislodge the diaphragm from sealing engagement with the process void and at least one vent void, a flow channel is formed from the process void to the vent void whereby the pressure is released through the vent void.

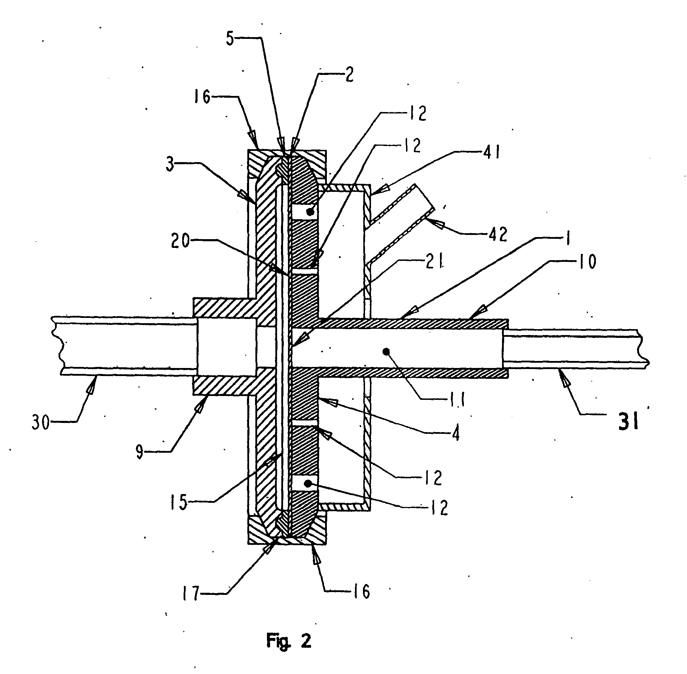

A cross-sectional view of the modulated pressure relief valve is shown in Fig. 2 as it would appear when the pressure on the reference surface 20 of the diaphragm 2 exceeds the pressure on the process surface 21 of the diaphragm. In this condition, the reference volume 15 is maximized and the process volume is essentially non-existent. As the pressure exerted on the area of the process surface 21 increases due to an increase in pressure in the process coupling 10, the diaphragm is persuaded away from the process housing, thereby distorting the diaphragm. If the pressure on the process surface 21 increases, the process volume enlarges at the expense of the reference volume. As the process volume increases, the diaphragm continues to be distorted until the diaphragm disengages with at least one vent void, 12, at which point the pressure is released through the vent void thereby allowing pressure to lower until the pressure is reduced to a pressure equal to the pressure in the reference volume, at which point the process volume decreases and the diaphragm reengages with the vent void. It would be apparent from the description that the higher the pressure difference between the vessel and the reference coupling, the more distorted the diaphragm becomes, thereby increasing diaphragm disengagement with the vent voids.

An optional vent hood 41 is provided, whereby all material transiting through the vent void is captured and collected through vent port 42. It is readily apparent that each vent void may have a separate vent port attached thereto. The vent ports allow the vented material to be captured and released as appropriate.

A clamping mechanism 16 with a receiving inset 17 is provided in Fig. 2, wherein the modulated pressure relief valve is received in the inset 17 to maintain the reference housing and process housing in sandwiched relationship with the diaphragm therebetween. The clamping mechanism could be a clamp, matching tabs, bolts, pliable ring seal, or any mechanism capable of maintaining the modulated pressure relief valve in sandwiched relationship. It is within the ability of one skilled in the art to utilize clamping mechanisms suitable for the application that would maintain the modulated pressure relief valve in the appropriate sandwiched relationship.

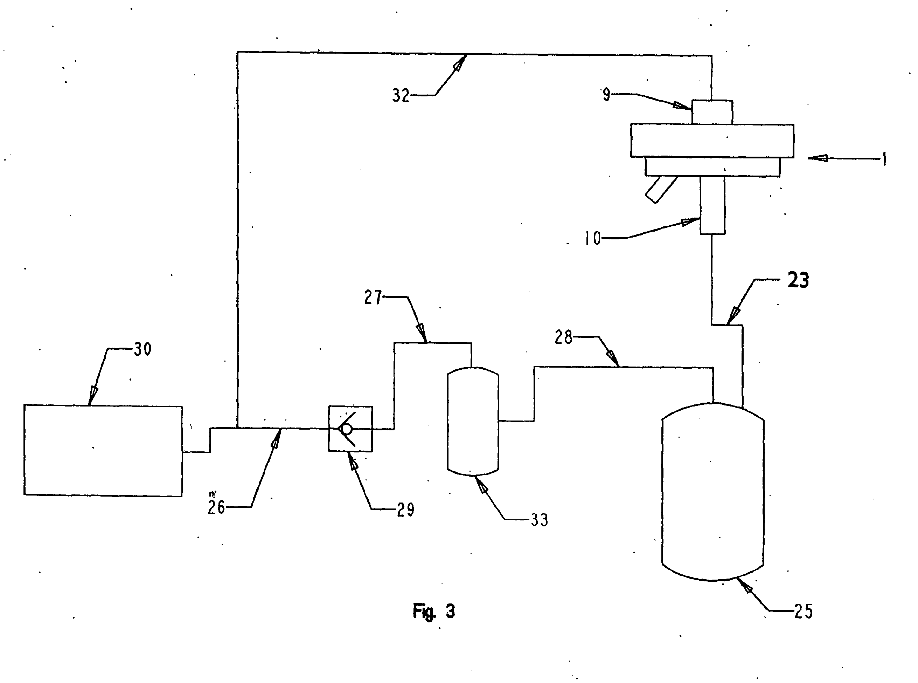

A schematic representation of a vessel process system incorporating the modulated pressure relief valve is provided in Fig. 3. In Fig.3, the modulated pressure relief valve 1 is integral to a pressure control system that includes a process vessel 25 and pressure reference source 30. The process vessel 25 is connected to the process coupling 10 of the modulated pressure relief valve 1 by a process line 23 as would be readily understood to one of ordinary skill in the art. The reference coupling 9 of the modulated pressure relief valve 1 is connected to the reference pressure source 30 by a process line 32 as would be readily understood to one of ordinary skill in the art to form a control loop. An optional, but preferred, feed back loop, comprising a check valve 29 and optional separator 33 provides optimal control of the pressure within the process vessel. The check valve 29 is preferably a one-way flow valve allowing flow towards the direction of the process vessel but not counter thereto. The process vessel 25, separator 33, check valve 29, and reference pressure source 30 are connected, preferably in series, by process lines 28, 27, and 26, respectively. The pressure in the process vessel is maintained by venting through the modulated pressure relief valve 1 or by replenishment through the check valve 29. The system allows for accurate, rapid pressure control in the process vessel. By way of example, if the operator desires to increase the pressure in the process vessel, the pressure from the reference pressure source is increased. The pressure on the reference surface of the diaphragm would then be increased, and the air (or other fluid) would flow through the check valve. Once the pressure in the process vessel equals the pressure supplied by the reference pressure source, the check valve and modulated pressure relief valve are both closed, thereby the system pressure is neutral. It would be apparent that, in typical manufacturing configurations, there is a possible pressure drop in the lines leading to the vessel. This pressure drop may be more than the corresponding pressure drop in the lines leading to the modulated pressure relief valve. This is advantageous for the present invention but not required. If the operator desires to lower the pressure in the process vessel the pressure supplied by the reference pressure source is decreased. The pressure exerted on the diaphragm will then be lower on the reference face of the diaphragm, and the process pressure will be allowed to vent until the pressure on each side of the diaphragm is rebalanced.

It is well known in the art that many control systems, particularly flow based control systems, do not adjust to a given level but instead typically go beyond the intended control level and then correct. This oscillatory approach is mitigated by the present invention which represents a particular advantage. Due to the ability of the modulated pressure relief valve to rapidly vent a system, as illustrated in Fig. 3, the pressure introduction is balanced sufficiently to minimize the buildup of pressure above the desired pressure. It would be within the ability of one skilled in the art to deploy the relief valve described herein to control the pressure of a process under vacuum by connecting the vent port 42 to a low pressure source such as a vacuum line or the suction of a vacuum pump. It would be within the ability of one skilled in the art to attach a pressure system to a coupling, and further description herein is not warranted. The reference housing is preferably constructed to prevent the diaphragm from being able to form a pressure-tight seal across the opening to the reference coupling. A groove in the reference housing body is sufficient for demonstration of the device.

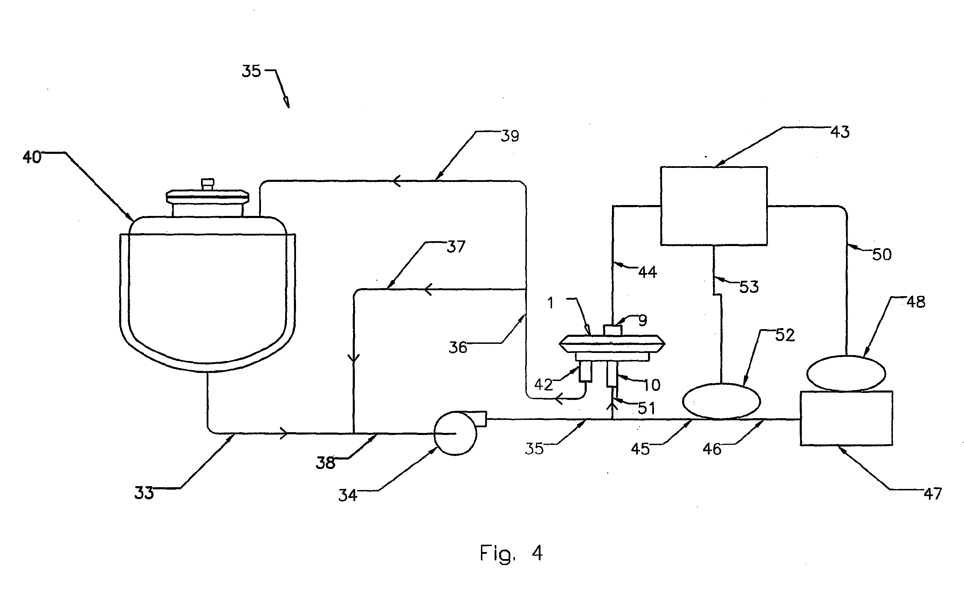

An embodiment of the process control system of the present invention is shown in Figure 4, and generally represented at 35. A relief valve 1 of the present invention is shown with a chamber provided to collect the vented fluid. The relief valve 1 is connected downstream of pump 34 by process lines 53 and 51, respectively. Vented fluid is collected and exits through process line 36, and is returned to the process upstream of the pump by process lines 37 and 38. Also, an alternate embodiment is shown whereby the vented fluid in line 36 returns to a supply vessel 40 through process line 39 upstream of the pump 34. Fluid from the process vessel is in flow communication with the inlet of the pump through lines 33 and 38.

The reference fluid pressure is provided to the relief valve 1 from a pressure-sending controller 43 through process line 44. With the pressure of the system downstream of the pump having been regulated by the relief valve, it is communicated through process lines 45 and 46 to an end use application 47 which could be any process requiring controlled pressure or flow rate. It is apparent to one skilled in the art that flow rate can be controlled by varying supply pressure to any conduit or device wherein pressure drop increases as flow rate increases.

An optional but preferred embodiment comprises the above process with the addition of a closed loop control system for controlling some process parameter measured by instrument 48. The process parameter is influenced in some way by the flow rate or pressure supplied from process line 46. The pressure sending controller 43 is connected to instrument 48 by signal line 50 and, in this embodiment, would vary its fluid pressure output as necessary to maintain the process parameter at the desired set-point.

In an alternate embodiment, flow rate or some other process parameter is measured by instrument 52 whose signal is communicated to the pressure sending controller43 by signal line 53. The pressure-sending controller would alter its output pressure as necessary to control the process parameter measured at instrument 52.

It would be apparent to one skilled in the art that the control loops could be altered or combined, based on the teachings herein, in various manners, such as a cascading or feed-forward control system, as necessary, to achieve the desired control of downstream process parameters. It would also be apparent to anyone skilled in the art based on teachings herein that a variety of other process components may be located anywhere throughout the system, such as filters, valves, etc.

End use applications include coating applicators (spray, slot, etc.), fluid dispensing systems, and inline injection of bi-components into other fluid streams, etc.

Process parameters measured include flow rate, pressure, temperature, pH, viscosity, or others that could be affected by the varying pressure or flow rate being controlled by the relief valve.

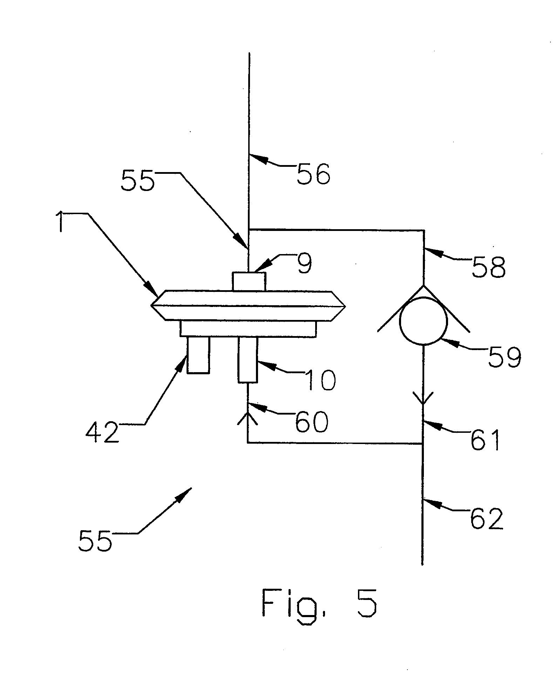

A schematic representation of a process system incorporating the modulated pressure relief valve is provided in Figure 5, shown at 55. The relief valve 1 receives the reference pressure from a pressure source in communication with lines 56 and 57 and connected to reference coupling 9. The process coupling 10 of said relief valve is connected through lines 60 and 62 to some process requiring pressure control. Excess pressure is vented through vent port 42. A check valve 29 is connected with an inlet in communication with the pressure source through 56 and 58. Its outlet is in communication with the process through 61 and 62.

This system described in Figure 5 provides a two-way supply and vent system for the control of a pressure process. Such a system complements the limitations of standard industrial electro-pneumatic transducers by providing sensitive, high-volume fluid relief from the downstream system. The check valve is preferably a low pressure-drop design.

The knowledge provided herein and understanding related to selection and location of the diaphragm, in conjunction with the placement, size, and shape of the vent voids, give the device a characterized performance curve. In practice, the valve can modulate between the closed state and cracked state, wherein venting occurs, with pressure differentials below % psi. This and subsequent pressure references are based on typical test conditions with process pressures in the 30 - 50 psi range.

A diaphragm is situated across a surface containing both the process void, from vessel or line, and a variety of smaller vent voids. On the reference surface of the diaphragm, the pressure reference fluid, preferably air, provides balancing forces. The sensitivity of the device is provided by the size of the vent voids from which the diaphragm is easily dislodged by low-pressure differences. Greater relief volume is provided by progressively larger vent voids. The distance between the diaphragm and the interior surface of the reference housing, which determines the reference volume, is a parameter in predicting and controlling the sensitivity of the device.

The characteristics of the diaphragm are integral to the performance of the device. Excellent sensitivity has been achieved with a flexible diaphragm with reinforcement fibers to prevent excessive stretching.

There are three fluid pressures acting on the diaphragm-process pressure, vent pressure, and reference pressure. The diaphragm serves to balance the process pressure and reference pressure.

During normal balanced or modulating mode, the diaphragm is drawn into a sealing relationship with the vent voids due to the pressure differential between the vent pressure and reference pressure. When the vessel pressure exceeds the reference pressure, the area of the diaphragm between the vent voids is persuaded away from the outlet holes, thereby allowing venting. This motion, however, is limited by the position of the interior surface of the reference housing. The diaphragm is forced into an irregular pattern, with regions closely surrounding the vent voids being unsupported by the interior surface of the reference housing, and therefore trying to pull the diaphragm out of contact with the outlet hole. At the smallest holes, the ratio of unsupported diaphragm area to outlet hole area can be very high, such as 400:1 for example. When the pressure differential ratio, which is defined as the differential Vessel -Reference divided by Reference-Vent, rises to the approximate area ratio, which is defined by the unsupported diaphragm area divided by the area of the vent void, then that particular vent void begins to crack open or modulate. The valve preferably opens up the smaller vent voids first, and gradually progresses to the larger vent voids. At higher differential pressures, such as several psi, the entire hole pattern opens up to allow higher venting volumes.

The selection of vent void size and spacing controls the relieving capacity and the sensitivity of the device. The desired combination of high relieving capacity and high sensitivity can be achieved by combining both small holes and large holes in the same device. The smaller the size of the smallest vent voids, the greater the sensitivity of the device. In one embodiment, a device with a minimum vent void diameter of 0.042" would yield a cracking sensitivity of approximately % psi. Smaller vent voids would be expected to provide more sensitivity. In one embodiment, the vent void is a frit with multiple flow paths through a given vent void. The vent voids are preferably large enough to avoid pluggage by contaminants in the fluid stream, and small enough to provide the required cracking sensitivity.

The number of small vent voids determines the relieving capacity of the device in the lower pressure differential range. While one very small vent void would provide a sensitive device that crack at very low-pressure differentials, it might not produce the needed effect on the system because the relieving volume of that hole might not be enough to control the system pressure. Therefore, a number of small vent voids may be provided such that the sum of their cross sectional area relates, proportionally, to the expected required relieving capacity. A vent void housing comprising 8 small holes, symmetrically arranged, is suitable for demonstration of the present invention.

Larger vent voids contribute to higher relieving capacity at the higher differential pressures. The ultimate relief capacity will be proportional to the sum total of all vent void cross-sectional areas. Depending on the overall space available, a large hole size should be selected which provides enough capacity per hole for the process conditions without being so large as to have inadequate sensitivity. The diameter of the larger holes determines the differential pressures at which the higher relief flows can occur. Large vent voids of approximately 0.15" diameter would be expected to begin cracking open in the 2-5 psi range.

The minimum and maximum vent void sizes are based on the desired sensitivity of the valve in the low and high flow regimes and the contaminant characteristics of the fluid. Intermediate vent void sizes may be selected to assure good relieving capacity in the medium differential pressure range. The number of vent voids should be selected to achieve the desired maximum flow capacity. The full open flow of the valve can be approximated by analyzing the parallel transmittance provided by the parallel outlet vent voids. Diaphragm size, typically defined by the diameter, is preferably selected to allow for a reasonable spacing ratio between vent voids which is based, in part, on diaphragm movement gap or the maximum distance between the reference surface and interior of the reference housing.

The cross section of the vent void at its entrance to the process volume may be square, or encompass one or more angles or one or more gradients. Vent void geometries which provide for more gradual reduction in the cross sectional area as the fluid enters from the process volume (i.e. a rounded or chamfered entrance) may be preferable for fluids which are sensitive to or can agglomerate in zones of high shear.

The process void may actually be one or more voids for the purpose of introducing upstream process pressure into the process volume. One or more process voids may have annular geometry. The valve may comprise more than one process fluid port, which could provide for dynamic flow through the valve body or process volume, even while there is no venting flow.

The size of the process void is not a critical design parameter, but is sized so that both the cross-sectional area of the process void and the cylindrical opening area between the process void and the retracted diaphragm (periphery multiplied by diaphragm movement gap) are both significantly larger than the sum total cross-sectional area of all the vent voids.

The diaphragm movement gap, or the maximum distance between the reference surface 20 and the reference housing, is a critical parameter. It affects the valve sensitivity and affects the optimum spacing of the vent void. The gap is preferably great enough that the cylindrical opening area (defined above), when the diaphragm is fully retracted against the reference housing, is larger than the sum total of the vent voids. The gap, however, must not exceed the free movement distance of the chosen diaphragm. A total diaphragm movement gap of 0.1 inch is suitable for demonstration of the invention.

Each vent void must have an adequate free area around it so that the diaphragm can form a dimple shaped unsupported area. The size of this spacing is primarily related to the gap distance that the diaphragm can move (distance between seat surface to reference housing surface). Increased vent void spacing tends to increase sensitivity up to a threshold ratio, and has less impact above that threshold ratio. This threshold ratio is dependant on diaphragm stiffness. A minimum hole spacing of 0.4 inches is adequate for demonstration of the present invention. The diaphragm movement gap of approximately 0.1 inch results in a vent void spacing to movement gap ratio of approximately 4:1.

The location of the vent voids is not a critical design parameter, assuming adequate spacing is provided. However, it is recommended that the smaller vent voids be located closer to the process void.

Another variable in the performance of the valve is the location of the diaphragm's peripheral constraint relative to the gap between the process surface and the reference surface. Offset of the diaphragm constraint in the direction of the reference surface tends to bias the valve to relieve at lower, or even negative differential pressures, which can result in an unnecessary flow or waste of fluid. For valve geometries where the process void is located near the center of the diaphragm, good balanced performance, with negligible waste flow, can be achieved by constraining the diaphragm directly along the plane of the process surface. For geometries where the process void is positioned annularly near the periphery of the diaphragm, good balanced performance can be achieved by positioning the diaphragm along the plane of the reference surface.

An offset in this constraint can be used to create a pressure bias. The placement and thickness of the optional seal can be used to define the diaphragm constraint location. The modulated pressure relief valve can be configured utilizing shaped surfaces, such as concave or convex, on the diaphragm, process housing or both. Ribbing in the diaphragm, or process housing, can also be effectively utilized to alter the pressure bias between the process pressure and reference pressure at which venting occurs. If the modulated pressure relief valve is configured with an offset, for example, wherein the diaphragm is away from the process surface, for example, a positive pressure bias can be created wherein the modulated pressure relief valve vents at a process pressure which is lower than the reference pressure. This is also referred to in the art as an opening bias. Alternatively, the modulated pressure relief valve can be configured such that a negative pressure bias is created wherein the process pressure must be higher than the reference pressure prior to venting. This would be referred to in the art as a closing bias.

The overall size of the diaphragm area is a factor in both the sensitivity of the valve and the number of holes that can be provided (at a given sensitivity). Increasing the overall size of the diaphragm area provides for greater potential relieving capacity, and can, when carefully combined with vent void size, spacing, and movement gap selection, offer greater pressure sensitivity at a given relieving capacity. A free diaphragm diameter of 2.9 inches is suitable for demonstration of the present invention.

The diaphragm's physical characteristics affect the relieving performance of the device. The diaphragm should preferably be pliable enough for bending, but resist excessive planar stretching. Polymeric films and elastomeric sheets have been successfully demonstrated. Fiber reinforced elastomeric diaphragms, which resist planar stretching, tend to promote higher sensitivities than un-reinforced elastomeric diaphragms by increasing the effective size of the unsupported area around each vent void. In practice, the diaphragm should be selected that is thin enough to be pliable, yet thick enough to withstand maximum system pressure stretched across the larger holes. A 1/32" thick fabric reinforced rubber sheet with a typical or moderate stiffness, such as a Shore A durometer in 50 - 80 range, is particularly suitable for demonstration of the present invention.

The reference pressure source is a fluid source wherein the pressure of the fluid source can be accurately controlled. Particularly preferred fluids include gases. A particularly preferred gas comprises nitrogen with a most preferred fluid being air. Liquids can also be employed but are less desirable.

The separator is preferably a chamber which allows fluids to separate from liquids in a stream. Separators are commonly employed to remove moisture from air streams wherein the air stream originates from a compressed air source. It is not uncommon for moisture to be entrained with the air flow and a separator allows the moisture to separate from the air flow. A separator can also provide a reservoir which acts to absorb, or dampen, rapid changes in pressure without transmitting the rapid pressure change further down the process line. For example, with water flow systems, an air reservoir may be employed to eliminate the phenomenon commonly referred to as "hammering" or "bumping" due to rapid changes in pressure.

The vessel process system is any system commonly employed in manufacturing environments wherein the pressure must be maintained at or below an upper maximum. The present invention is suitable for use with fixed reaction kettles where the pressure in the reaction kettle must be monitored and with flow systems wherein the pressure build of flowing materials must be monitored.

In an alternate embodiment of the vessel process system, the process vessel could have variable internal volume, as in the case of a pneumatic actuation cylinder. In this case, the relief valve could assist in controlling pressure created by external movement of the actuation cylinder.

It would be well within the ability of those with ordinary skill in the art to capture the material as it escapes form the vent voids or to redirect the material to a location of minimal concern.

For process fluids with low compressibility (i.e. liquids), it may be necessary to modify the system design to prevent chatter, or resonance, in the downstream vent piping. Such resonance is an inherent feature of a highly sensitive modulating pressure regulating valve, whereby a pressure pulse traveling upstream in the vent piping and striking the vent void can have a net positive influence on the amount of fluid allowed through the vent void (thereby providing positive feedback to the initial pulse).

Methods of minimizing this pressure resonance include minimizing flow velocities in the downstream conduit, minimizing downstream conduit length, altering downstream conduit stiffness, and the introduction or enhancement of compressibility in the downstream piping system. The addition of such compressibility, if necessary, could be provided by either direct or indirect exposure of the less compressible fluid to a more compressible fluid somewhere downstream of the vent void (i.e. addition of separator or air bladder).

The invention has been described with particular reference to the preferred embodiments which are intended to enable one of ordinary skill in the art to demonstrate the present invention. The preferred embodiments are not intended to limit the scope of the present invention which is set forth in the claims appended hereto.

## Claims

1. A relief valve or a backpressure regulator (1) comprising:
a diaphragm (2) between a reference housing (3) and a process housing (4) wherein:
said reference housing (3) is adapted to be connected in fluid communication with a fluid at a reference pressure;
said process housing(4) comprises at least one process void (11) adapted to be connected in fluid communication with a fluid at a process pressure; **characterized in that**
said process housing (4) comprises a plurality of vent voids (12) disposed in parallel flow communication with said diaphragm (2); and
wherein the diaphragm (4), reference housing (3), and process housing (4) are arranged such that, when said reference pressure exceeds said process pressure said diaphragm (4) is engaged with said vent voids (12), and when said process pressure exceeds said reference pressure, said diaphragm (4) is not engaged with at least one of said vent voids (12) such that said process pressure may decrease by venting through said vent void (12), wherein a total process void cross-sectional area is larger than a sum total cross-sectional area of said vent voids (12).

2. The relief valve or backpressure regulator (1) of claim 1 comprising a first vent void (12) and a second vent void (12) wherein said first vent void (12) is larger than said second vent void (12).

3. The relief valve or backpressure regulator (1) of claims 1-2 wherein a plane of constraint of said diaphragm (2) is positioned so as to create an opening or closing pressure bias.

4. The relief valve or backpressure regulator (1) of claims 1-2, wherein the process void (11) is annular.

5. The relief valve or backpressure regulator (1) of claim 1 wherein a diaphragm movement gap between said process housing (4) and said reference housing (3) is about 3 percent than a free diameter of said diaphragm (2).

6. The relief valve or backpressure regulator (1) of claim 1 wherein:
each of said vent voids (12) and its closest neighboring vent void (12) being separated by a selected vent void spacing; and
a predetermined gap for allowing movement of said diaphragm (4) is provided, and a ratio of said vent void spacing to said predetermined gap is about 4 to 1.

7. The relief valve or backpressure regulator (1) of claim 1 wherein a vent void spacing between each of said vent voids (12) and its closest neighboring vent void (12) is at least about 2.7 times the diameter of a selected one of said vent voids (12).

8. The relief valve or backpressure regulator (1) of claim 1 wherein the diaphragm (4), reference housing (3), and process housing (4) are arranged such that, when said process pressure exceeds said reference pressure by a selected differential of about 0.8% or less of said process pressure, said diaphragm (4) is not engaged with at least one of said vent voids (12).

9. The relief valve or backpressure regulator (1) of claim 8 wherein the selected differential is about 0.5% or less of the process pressure.

## Patentansprüche

1. Entlastungsventil oder Gegendruckregler (1) umfassend:
eine Membran (2) zwischen einem referenzseitigen Gehäuse (3) und einem prozessseitigen Gehäuse (4), wobei:
das genannte referenzseitiges Gehäuse (3) geeignet ist, mit einem Fluid mit einem Referenzdruck in Fluidverbindung gebracht zu werden;
das genannte prozessseitige Gehäuse (4) zumindest ein prozessseitiges Loch (11) aufweist, welches mit einem Fluid mit Prozessdruck in Fluidverbindung gebracht werden kann; **dadurch gekennzeichnet, dass** das genannte prozessseitige Gehäuse (4) eine Mehrzahl von Entlüftungslöchern (12) aufweist, welche in paralleler Fließverbindung mit der genannten Membran (2) angeordnet sind; und
wobei die Membran (2), das referenzseitige Gehäuse (3) und das prozessseitige Gehäuse (4) so angeordnet sind, dass wenn der genannte Referenzdruck den genannten Prozessdruck übersteigt, die Membran (2) mit den genannten Entlüftungslöchern (12) in Wirkverbindung ist und wenn der genannte Prozessdruck den genannten Referenzdruck übersteigt, die genannte Membran (2) mit zumindest einem der Entlüftungslöcher (12) nicht in Wirkverbindung steht, sodass der genannte Prozessdruck durch das Entlüften durch die genannten Entlüftungslöcher (12) absinken kann, wobei die gesamte Querschnittsfläche der prozessseitigen Löcher größer ist als die gesamte Querschnittsfläche der genannten Entlüftungslöcher (12).

2. Entlastungsventil oder Gegendruckregler (1) nach Anspruch 1 umfassend ein erstes Entlüftungsloch (12) und ein zweites Entlüftungsloch (12), wobei das genannte erste Entlüftungsloch (12) größer ist als das genannte zweite Entlüftungsloch (12).

3. Entlastungsventil oder Gegendruckregler (1) nach den Ansprüchen 1 bis 2, wobei eine Zwangsebene der genannten Membran (2) angeordnet ist, um eine Öffnungs- oder Schließdruck-Vorspannung zu erzeugen.

4. Entlastungsventil oder Gegendruckregler (1) nach den Ansprüchen 1 bis 2, wobei das prozessseitige Loch (11) ringförmig ist.

5. Entlüftungsventil oder Gegendruckregler (1) nach Anspruch 1, wobei der Spalt für die Bewegung der Membran zwischen dem genannten prozessseitigen Gehäuse (4) und dem genannten referenzseitigen Gehäuse (3) ungefähr 3 % des freien Durchmessers der genannten Membran (2) ist.

6. Entlastungsventil oder Gegendruckregler (1) nach Anspruch 1, wobei jedes der genannten Entlüftungslöcher (12) und sein nächstliegendes Entlüftungsloch (12) durch einen bestimmten Abstand von einander getrennt sind; und
ein vorbestimmter Spalt, um die Bewegung der genannten Membran (2) zu gestatten, vorgesehen ist und das Verhältnis des genannten Abstandes zwischen den Belüftungslöchern und dem genannten vorbestimmten Spalt ungefähr 4:1 ist.

7. Entlastungsventil oder Gegendruckregler (1) nach Anspruch 1, wobei der Abstand zwischen jedem der genannten Entlüftungslöcher (12) und dem nächstgelegenen Entlüftungsloch (12) mindestens ungefähr 2,7 mal der Durchmesser eines bestimmten der genannten Entlüftungslöcher (12) ist.

8. Entlastungsventil oder Gegendruckregler (1) nach Anspruch 1, wobei die Membran (2), das referenzseitige Gehäuse (3) und das prozessseitige Gehäuse (4) so angeordnet sind, dass wenn der genannte Prozessdruck den genannten Referenzdruck um einen bestimmten Bruchteil von ungefähr 0,8 % oder weniger des genannten Prozessdrucks übersteigt, die genannte Membran (2) nicht mit zumindest einem der genannten Entlüftungslöcher (12) in Wirkverbindung steht.

9. Entlastungsventil oder Gegendruckregler (1) nach Anspruch 8, wobei der bestimmte Bruchteil ungefähr 0,5 % oder weniger des Prozessdrucks ist.

## Revendications

1. Valve de détente ou régulateur de contre-pression (1), comprenant :
un diaphragme (2) situé entre un boîtier de référence (3) et un boîtier de procédé (4), dans laquelle/lequel ;
ledit boîtier de référence (3) est apte à être placé en communication fluidique avec un fluide sous une pression de référence ;
ledit boîtier de procédé (4) comprend au moins un orifice de procédé (11) apte à être placé en communication fluidique avec un fluide sous une pression de procédé ; ***caractérisé en ce que***
ledit boîtier de procédé (4) comprend une pluralité d'orifices d'évent (12) placés en communication d'écoulement parallèle avec ledit diaphragme (2) ; et
dans laquelle/lequel le diaphragme (2), le boîtier de référence (3) et le boîtier de procédé (4) sont agencés de telle sorte que, lorsque ladite pression de référence excède ladite pression de procédé, ledit diaphragme (2) soit engagé avec lesdits orifices d'évent (12), et lorsque ladite pression de procédé excède ladite pression de référence, ledit diaphragme (2) ne soit pas engagé avec au moins l'un desdits orifices d'évent (12) de telle sorte que ladite pression de procédé puisse diminuer par évacuation à travers ledit orifice d'évent (12), une aire totale de la section transversale de l'orifice de procédé est supérieure à une somme totale d'aire de la section transversale desdits orifices d'évent (12).

2. Valve de détente ou régulateur de contre-pression (1) selon la revendication 1, comprenant un premier orifice d'évent (12) et un deuxième orifice d'évent (12), dans laquelle/lequel ledit premier orifice d'évent (12) est plus grand que ledit deuxième orifice d'évent (12).

3. Valve de détente ou régulateur de contre-pression (1) selon les revendications 1-2, dans laquelle/lequel un plan de contrainte dudit diaphragme (2) est positionné de manière à créer une force de pression d'ouverture ou de fermeture.

4. Valve de détente ou régulateur de contre-pression (1) selon les revendications 1-2, dans laquelle/lequel l'orifice de procédé (11) est annulaire.

5. Valve de détente ou régulateur de contre-pression (1) selon la revendication 1, dans laquelle/lequel un espace libre pour le déplacement du diaphragme entre ledit boîtier de procédé (4) et ledit boîtier de référence (3) est égal à environ 3 % d'un diamètre libre dudit diaphragme (2).

6. Valve de détente ou régulateur de contre-pression (1) selon la revendication 1, dans laquelle/lequel :
chacun desdits orifices d'évent (12) et l'orifice d'évent (12) qui est son voisin le plus proche sont séparés par un écartement entre orifices d'évent sélectionné ; et
un espace libre prédéterminé pour permettre le déplacement dudit diaphragme (2) est prévu, et un rapport dudit écartement entre orifices d'évent audit espace libre prédéterminé est d'environ 4 à 1.

7. Valve de détente ou régulateur de contre-pression (1) selon la revendication 1, dans laquelle/lequel un écartement des orifices d'évent entre chacun desdits orifices d'évent (12) et l'orifice d'évent (12) qui est son voisin le plus proche est égale à au moins 2,7 fois environ le diamètre de l'un choisi desdits orifices d'évent (12).

8. Valve de détente ou régulateur de contre-pression (1) selon la revendication 1, dans laquelle/lequel le diaphragme (2), le boîtier de référence (3) et le boîtier de procédé (4) sont disposés de telle sorte que, lorsque ladite pression de procédé excède ladite pression de référence d'une différence choisie d'environ 0,8 % ou moins de ladite pression de procédé, ledit diaphragme (2) n'est pas engagé avec au moins l'un desdits orifices d'évent (12).

9. Valve de détente ou régulateur de contre-pression (1) selon la revendication 8, dans laquelle/lequel la différence choisie est d'environ 0,5 % ou moins de la pression de procédé.
